# EUROPEAN PATENT APPLICATION

(11) **EP 4 553 053 A1**
(43) Date of publication of application: **14.05.2025**
(21) Application number: 23209507.5
(22) Date of filing: 13.11.2023
(51) Int. Cl.: C04B 28/02, C04B 14/04, C04B 28/04, C04B 28/06, C04B 111/10

(54) **COMPOSITE CEMENT COMPRISING ZEOLITE AND CALCIUM CARBONATE**

(71) Applicant: Heidelberg Materials AG, 69120 Heidelberg (DE)
(72) Inventor: SHI, Zhenguo, 69120 Heidelberg (DE); BULLERJAHN, Frank, 69120 Heidelberg (DE); BOLTE, Gerd, 69120 Heidelberg (DE)
(74) Representative: Zellentin & Partner mbB Patentanwälte

(57) **Abstract**

Composite cement comprising a hydraulic cement, a calcium carbonate and at least 15 wt.-% zeolite with respect to the total composite cement weight, wherein the zeolite/calcium carbonate weight ratio ranges from 0.5 to 4.0 and neither slag nor fly ash is contained in an amount of > 1 wt.-%.

## Description

The present invention relates to a composite cement comprising zeolite and calcium carbonate.

Cement is one of the most widely used products in construction. The cement industry is struggling with high CO₂ emissions related to the production of cement clinker. A major part of the CO₂ emissions related to the clinker production originates from the raw materials used, i.e., from limestone. As environmentally friendlier alternatives to limestone do not exist at large enough scale, reduction of the raw material emissions by limestone substitution is not possible. Thus, reducing the requirement of natural resources in manufacturing cement, both mineral raw materials and fuels, has been a target for decades. Exchanging raw materials and fuels with waste and by-products is especially beneficial as is the use of such materials instead of cement clinker, i.e., as supplementary cementitious material (abbreviated SCM herein).

Unfortunately, reduction of cement and concrete industry environmental footprint by utilization of industrial waste and by-products as SCM for clinker replacement has reached global availability limits of established useful materials (fly ashes and granulated blast furnace slag). By no means all by-products and waste products are suitable as SCM. The pozzolanic or latent hydraulic reactivity may not be too low, as otherwise the properties of the building material created from the cement and SCM will be negatively impacted. Requirements are defined in ASTM C618 for fly ash and raw or calcined natural pozzolan, ASTM C1240 for silica fume, and ASTM C989 for slag. Further, a new standard for natural pozzolans and natural calcinated pozzolans (NS 3650) was put up for enquiry in the period 17.5.2023 - 31.7.2023. The availability of the two most important SCM - fly ashes and blast furnace slags - is expected to decrease with the progressing decarbonation of the electricity sector and increased steel recycling, respectively. As a result, it is an object to provide alternative SCM.

Widely available and accepted materials are limestone, clay, and recycled concrete fines. The suitable amount of limestone in a composite cement is limited, since it does not comprise reactive silicate and/or aluminate phases. Clay is abundant and shows high reactivity when suitably calcined, but only specific qualities are easily used. Those high-quality clays have other beneficial uses with which the manufacturing of composite cement would compete. Recycled concrete fines can be very reactive and are about to be included in the standard, but their use is complicated due to their very variable composition.

Another option are natural pozzolans. To be useful they need to contribute to cement hardening, usually by a chemical reaction of the phases in the SCM with hydration products of cement clinker and water. Most natural pozzolans are linked to volcanic activities. Such volcanic materials typically have to contain high contents of an amorphous, i.e. glassy phase, to qualify as pozzolan, i.e., demonstrate a meaningful pozzolanic reaction. Crystalline materials generally do not qualify as pozzolan, as the crystalline phases do not react even under alkaline boosted conditions (alkaline boosted conditions mean a pH of at least 12.5). Furthermore, suitable materials demonstrate in general a low degree of alteration, i.e. natural weathering. Still, such sources often show relatively low reactivity and individual phases comprised in them can have very different reactivity. The availability of sufficiently reactive natural pozzolans is differing from location to location. A transportation over long distances is often undesirable for natural pozzolans since the benefit of using SCM is rapidly overbalanced by transportation cost and the associated CO₂ emissions. Thus, most unaltered reactive natural pozzolans cannot solve the above object.

Another type of natural pozzolan is natural zeolite. In many countries natural zeolites are abundant. Zeolites are aluminosilicates mainly consisting of silicon, aluminum, and oxygen accommodating a wide variety of cations, such as Na⁺, K⁺, Ca²⁺, Mg²⁺ and others. Since these positive ions are often loosely held and can readily be exchanged for others, zeolites are well known as ion exchange materials. Zeolites have microporous structures with a typical pore diameter from 0.3 to 0.8 nm which renders them useful as molecular sieves. The Si/AI molar ratio is normally greater than 1. Natural zeolites usually have Si/AI molar ratios below about 6. Some of the more common mineral zeolites are analcime, chabazite, clinoptilolite, heulandite, mordenite, phillipsite, and stilbite. Natural zeolites form by reaction of volcanic rocks and ash layers with alkaline groundwater. Zeolites also crystallize in post-depositional environments like in shallow marine basins over periods ranging from thousands to millions of years. Naturally occurring zeolites are rarely pure, they are often mixtures of several zeolite minerals and/or are contaminated to varying degrees by other minerals, such as but not limited to quartz, feldspars, clays, and mica. Other impurities like iron oxides are also frequently found. Therefore, natural zeolites are seldom useful as ion exchange material or molecular sieve without extensive treatment and synthetic zeolites are provided for these uses. The use of natural zeolites as SCM in composite cements is possible because neither a mixture of various zeolites nor the presence of further minerals interferes with this. But the high surface area of zeolites, causing a high to very high water demand, is a considerable drawback. Thus, they have mainly been used in minor amounts so far.

According to C. Florez et al., "Effects of calcination and a milling pretreatment on natural zeolites as supplementary cementitious materials", DOI: 10.1016/j.conbuildmat.2021.125220 a fine grinding and/or calcination can improve the reactivity and/or reduce the water demand of composite cements comprising Portland Cement and zeolite. From this study, a milling of the zeolite to a D₉₀ of about 45 µm was recommended as the most effective approach. However, the document lacks any evidence that the water demand could be reduced by fine grinding.

According to CN 102815877 A; T. Kropyvnytska et al., "Properties of Portland-composite cements with zeolite tuff", DOI: 10.7862/rb.2018.39; M. Sanytsky et al., "Eco-efficient blended cements with high volume of supplementary cementitious materials", DOI: 10.35784/bud-arch.816; and M. Sanytsky et al., "Performance of multicomponent Portland cements containing granulated blast furnace slag, zeolite and limestone", DOI: 10.32047/CWB.2020.25.5.7, quaternary composite cements comprising cement and zeolites in combination with fly ash and limestone or with granulated blast furnace slag and limestone, as well as ternary cements comprising cement, zeolite and fly ash were found to show good reactivity and acceptable water demand. The composite cements found useful all contained significant amounts of granulated blast furnace slag or fly ash. Thus, the contribution to the strength development was primarily derived from the classical SCMs, namely granulated blast furnace slag or fly ash, in most cases. For example, highly reactive granulated ground blast furnace slag was used in the work of M. Sanytsky et al., DOI: 10.35784/bud-arch.816. The synergies between limestone and slag in Portland composite cement are well-known, while the interaction with or the impact of zeolite remained unknown. Moreover, the study demonstrated that the consistency could be adjusted but acceptable consistency was accompanied by a significant loss of compressive strength. Also as mentioned before, slags and fly ashes are expected to become rare, and quaternary composites are comparably complicated to make and quality control is more complex.

EP 4 194 417 A1 describes a calcination of zeolites by introducing them into the clinker cooler and using the heat emitted by the clinker for calcination. This provides a reactive zeolite with acceptable water demand and avoids spending energy for calcination. However, the amount of SCM in the composite cement is fixed with this approach, the ratio of SCM to cement cannot be adapted to specific needs. In case additional zeolite shall be added this would necessitate a separate activation with its associated disadvantages. Further, this method necessitates a co-grinding of zeolite and clinker. As a result, flexibility is lacking.

Thus, the problem of reducing energy demand and carbon dioxide footprint of cement and its manufacturing is not fully solved, yet. More specifically, it would be desirable to have supplementary cementitious materials that are sufficiently reactive (e.g. under standard ASTM C618 (7d, 28d activity index ≥ 75 %, lowest requirement), NS 3650 (28d activity index ≥ 75 %, 90d activity index ≥ 85 %)) to allow high clinker replacement levels, are available everywhere, inexpensive and obtainable with little or without energy expenditure as well as providing adequate properties of the fresh paste, i.e. a useful consistency measured as water demand according to DIN EN 196-3:2017 and/or as mortar spread according to DIN EN 413-2. It is not always necessary that a composite cement shows consistency values expected for a CEM I, i.e. 29 ± 3 % water demand and/or 180 ± 40 mm mortar spread, without an addition of admixtures. But a too high water demand (> 32%) or too low mortar spread (< 140 mm) can often not be remedied with admixtures, or the cost of remedying it by adding excessive admixtures would be prohibitively high. Therefore, if a composite cement does not meet these two expectations, it is most probably to be deemed unacceptable by the end users. Therefore, the composite cement without added admixtures should have a consistency that is either acceptable (water demand < 32%, mortar spread > 140 mm) or sufficiently near the acceptable values (water demand < 32%, mortar spread > 140 mm) to achieve them by adding one or more admixture(s).

Surprisingly it was now found that natural zeolites combined with calcium carbonates provide highly reactive composite cements showing a significantly improved consistency in comparison to the consistency of composite cements with the same amount of solely zeolite as SCM without calcination of the zeolite or addition of further highly reactive components like ground granulated blast furnace slag or fly ash. The consistency obtained is such that a composite cement has a normal consistency or at least a consistency acceptable for the use or its consistency is adjustable to a normal or acceptable consistency by adding one or more admixtures in amount(s) that are technically and economically feasible.

Thus, the mentioned problem is solved by a composite cement comprising a hydraulic cement, a calcium carbonate and at least 15 wt.-% zeolite with respect to the total composite cement weight, wherein the zeolite/calcium carbonate weight ratio ranges from 0.5 to 4.0 and neither ground granulated blast furnace slag nor fly ash is contained in an amount of more than 1 wt.-%. The ability to formulate normal to highly reactive composite cements with low clinker factor and without the presence of reactive classical SCM types presents an important innovation, considering the declining availability of such SCM.

Composite cements according to the present invention show a significant recovery of fresh properties in comparison to the consistency loss of composite cements comprising the same amount of solely zeolite as SCM. Herein, consistency is measured as water demand measured according to DIN EN 196-3:2017 and/or measured as mortar spread measured according to DIN EN 413-2. Both water demand and mortar spread are influenced by the hydraulic cement used so that a direct comparison of water demand or mortar spread for composite cements based on different hydraulic cements or amounts of hydraulic cement is not meaningful. Therefore, the improvement is best defined through the recovery, not with absolute values. The recovery is calculated from values measured on samples made from the hydraulic cement (reference cement), from a composite cement comprising the zeolite and calcium carbonate (limestone zeolite cement) as SCMs, and from a comparison composite cement comprising the same amount of only zeolite (zeolite cement) as SCM. The water demand recovery is calculated as [(water demand zeolite cement - water demand limestone zeolite cement) / (water demand zeolite cement - water demand reference cement)], and the mortar spread recovery as [(mortar spread limestone zeolite cement - mortar spread zeolite cement) / (mortar spread reference cement - mortar spread zeolite cement)]. In this context, "mortar spread" denotes the measurement of the spread of mortar right after it has been mixed. Preferably, the water demand recovery ranges from 9 to 90 %, more preferably is > 30 %, most preferred is > 40 %. The mortar spread recovery preferably ranges from 9 to 65 %, more preferably is > 30 %, most preferred is > 40 %. Furthermore, the composite cement according to the present invention often also achieves an extended workability over time in comparison to the composite cement solely with zeolite. Specifically, a measurable mortar spread is usually maintained longer than 40 minutes after mixing, preferably longer than 60 minutes after mixing, and most preferably extending to 90 minutes after mixing.

Clinker replacement levels from 20 wt.-% to 40 wt.-%, preferably from 25 wt.-% to 30 wt.-%, are possible while preserving strength as required by EN 197-1. Preferably, the compressive strength of the composite cements according to the present invention measured according to EN 197-1 after 2 days is ≥ 10.0 MPa, or ≥ 20.0 MPa, or ≥ 30.0 MPa and after 28 days is ≥ 32.5 MPa, or ≥ 42.5 MPa, or ≥ 52.5 MPa.

It is a specific advantage of the composite cements according to the invention that the combination of zeolite and calcium carbonate ensures a proper consistency and the desired compressive strength development, i.e., useful early strength at 1, 2 and 7 days as well as standard strength after 28 days. The strength after 90 days is usually even higher, often considerably higher, than at 28 days.

Herein, hydraulic cement designates a material that, after mixing with an aqueous liquid to form a paste, is able to develop mechanical strength by hydraulic reaction. Thus, cement mostly denotes a clinker ground with or without further components, but also mixtures like super sulphated cement, geopolymer binder, and hydraulic materials not obtained by sintering like a dicalcium silicate obtained by hydrothermal treatment. Clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated raw meal. The starting material may contain mineralizers, which are substances decreasing the temperature necessary for melting and/or act as fluxes and/or enhance clinker formation, e.g., by forming solid solutions or stabilisation of phases. Mineralizers can be part of the starting material components or be added as separate component. Composite cement or binder mixture means a mixture containing cement and a supplementary cementitious material. A cement, composite cement or binder is usually used adding water or another liquid and mostly also aggregate. Typically, admixtures and/or additives are added to the cement/binder and/or the paste formed by mixing the cement or binder with water (or another liquid).

The hydraulic cement used in the present invention is preferably an Ordinary Portland cement (abbreviated OPC) or a Portland cement-based cement. However, other hydraulic cements such as, but not limited to, calcium aluminate cements, calcium sulfoaluminate cements, belite binders obtained by hydrothermal treatment and subsequent tempering and/or reactive grinding are also useful. The respective cement clinkers, ground appropriately fine, can also be used as hydraulic cement. When a Portland cement clinker is used as the hydraulic cement component, and also in cases where a cement does not contain the desired amount of it, a sulfate carrier is added. Usual are e.g. gypsum, hemihydrate and anhydrite. Advantageously, the sulfate carrier content is adjusted to conform with applicable standards such as EN 197-1. However, the content is primarily adjusted to provide the desired setting time. The contents of SOs are normally in the range from 1 - 4 wt.-%, preferably from 1 - 3 wt.-%, and often from 1.5 - 2.5 wt.-%, sulfate carrier with respect to the combined weight of cement clinker and SCM.

The calcium carbonate can be, for example but not limited to, limestone, dolomite, carbonated recycled cement paste, precipitated calcium carbonate or a mixture of two or more or all of them. Especially preferred is limestone. The CaCO₃ content of the used calcium carbonate is typically at least 40 wt.-%, preferably at least 60 wt.-%, more preferred at least 75 wt.-%, and most preferred at least 90 wt.-%. Limestone and precipitated carbonate usually have a CaCO₃ content of ≥ 90 wt.-% or ≥ 95 wt.-% or ≥ 99 wt.-% or 100 wt.-%. Typically, the calcium carbonate is provided with a fineness D₉₀ ≤ 200 µm, preferably D₉₀ ≤ 125 µm. Particle size distributions (abbreviated PSD) are measured herein by sieving for sizes above 2 mm and determined by laser granulometry for sizes below 1 mm with a Mastersizer (Malvern Panalytical Ltd., GB) according to the Fraunhofer theory, in isopropanol dispersion. Dₓₓ values are volume based. In the 1 - 2 mm range the method is chosen depending on the particle size range of the material. For ranges extending mainly above 1 mm sieving is commonly applied, for ranges extending mainly below 1 mm laser granulometry is typically better.

All zeolites as described above and especially also mixtures of two or more of them including zeolites containing a considerable amount of other mineral phases are suitable according to the invention. According to the invention, natural zeolites are used. This means, the zeolite as obtained from a quarry or also reclaimed from e.g. landfilling of zeolites that were found unsuitable or were quarry overburden at the time of their mining. The natural zeolite can be used as obtained from the quarry (or landfill etc.) or subjected to a drying and/or grinding when needed. However, the zeolite is not activated according to the invention, i.e., when drying or grinding conditions are selected that do not change the chemistry and crystal morphology of the zeolite, or at least do not substantially change them.

Natural zeolites are found in diverse geological settings and exhibit a varied composition. Apart from their distinctive crystalline aluminosilicate structure, many natural zeolites also encompass additional phases like clay minerals and amorphous materials. The content of clay minerals in zeolitic rocks typically remains below 40 wt.%, preferably less than 20 wt.%, most preferred less than 10 wt.%. Zeolites in their natural state typically exhibit a crystalline structure, and the term "amorphous zeolite" is not commonly used to describe naturally occurring zeolites. However, it's worth noting that natural zeolites can sometimes contain impurities, poorly crystalline regions, or structural disorder that may resemble amorphous characteristics to some extent. Such zeolitic amorphous components cannot be distinguished from typical amorphous aluminate silicate materials. The concept of amorphous zeolite is more commonly associated with synthetic zeolites that have been prepared under conditions that result in a lack of well-defined crystallinity. These synthetic materials can display properties similar to zeolites while lacking the ordered atomic arrangement seen in fully crystalline zeolites. Hence, there are no limitations on the presence of amorphous content in the zeolite used for the composite cement according to this invention.

Preferred zeolites mainly comprise zeolite phases like clinoptilolite, heulandite, mordenite, chabazite, natrolite, phillipsite, analcime, and stilbite or mixtures of two or more thereof. Typically, the Si/AI molar ratio is below about 3, preferably from 1 to 3. The zeolites can comprise other mineral phases, e.g., volcanic glass, olivine, plagioclase, pyroxene, ion oxides, quartz, feldspar, clay minerals, mica and calcite, and also impurities like organic matter and cellulose. The amount of such non-zeolite components is preferably below 60 wt.-%, more preferred below 55 wt.-% and most preferred below 50 wt.-% with respect to the total zeolite material added to the composite cement.

Drying is advantageous in cases where the natural zeolite as obtained contains more than 15 wt.-% water. Preferably, the zeolite should contain less than 5 wt.-%, most preferred less than 3 wt.-%, water when it is blended with the hydraulic cement. If needed, drying can take place in any known device. For cost and environmental reasons, it is preferred to use an off-gas for drying. Useful are off-gases generated in the cement manufacturing process e.g. kiln exhaust gas, tertiary air from the clinker cooler, exhaust gas from preheating and/or calcination of the raw meal. Of course, off-gas from other processes can be used as well. The temperature is adjusted to range from about 100 to about 400 °C, i.e., sufficiently efficient to remove the moisture without removing the bound water of the materials. Preferably, the temperature is less than 200 °C, at which only water adhering to surfaces or present in pores and internal surfaces is evaporated but no or substantially no chemically bound or crystal water is removed. Thereby, energy demand is kept to a minimum. Removal of the surface hydroxyl groups of zeolite (i.e. a calcination) at temperatures above approximately 600 °C results in similar impact to reduce the water demand and increase the workability, so that there would be no additional benefit by adding limestone. But drying temperatures above 400 °C can be useful, when a specific zeolite is not dried fast enough at lower temperatures and is essentially not calcined at the selected temperature, i.e. not more than 10 wt.-% of the zeolite are calcined.

When the zeolite or mixture of zeolites as obtained is not fine enough or the particle size distribution (abbreviated PSD) does not conform to the requirements it can be subjected to a grinding or to a sieving or classification or screening etc. or to a combination thereof to adjust the PSD. Typically, the PSD should have a D₅₀ < 50 µm, preferably < 20 µm, most preferred <14 µm. The conditions during grinding are preferably selected so that no relevant chemical or morphological changes occur, i.e., especially grinding energy and duration are sufficient to comminute the particles while avoiding an activation.

The weight ratio of zeolite to calcium carbonate is important for achieving the necessary balance of strength development and consistency when the composite cement is used to make hydraulically hardening building materials. Hydraulically hardening building material means a wet mixture that is able to harden hydraulically and comprises a cement as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks. Building structure denotes the hardened building material, e.g., a pre-cast concrete element or a floor or a bridge part from cast in place concrete.

A weight ratio of the zeolite minerals to calcium carbonate ranging from > 0.5 to 4.0, preferably from > 0.6 to 3.0, most preferred from > 0.9 to 2.0, achieves such a balance of strength development and consistency. It is also important that only the zeolite minerals are taken into account as zeolite and all the CaCO₃ but also only that is taken into account for calculating the ratio. Thus, any calcium carbonate present in the zeolite or hydraulic cement is taken into account for the calcium carbonate in addition to the calcium carbonate added as component, but from the added calcium carbonate also only the CaCO₃ is taken into account.

The composite cement according to the invention is made by blending the hydraulic cement (or cement clinker and sulfate carrier) with zeolite and calcium carbonate. Any known device can be used for blending. In one embodiment, blending is combined with grinding. An amine grinding aid can be used for grinding the cement clinker. Grinding of the cement clinker can also take place mixed with - a part of - the zeolite and/or calcium carbonate, including a second grinding. Preferred substances are diisopropanolamine, methyldiethanolamine, triethanolamine, triisopropanolamine, and diethanol-isopropanolamine, most preferred are triethanolamine, triisopropanolamine, and diethanol-isopropanolamine. The fineness of the composite cement preferably ranges from 2500 cm²/g to 8000 cm²/g, more preferred from 3000 cm²/g to 7000 cm²/g and most preferred from 3500 cm²/g to 6000 cm²/g according to Blaine (determined according to EN 196-6:2018).

The amount of hydraulic cement in the composite cement according to the invention typically ranges from 55 to 85 wt.-%, preferably from 60 to 80 wt.-%, most preferred from 65 to 75 wt.-%. The amount of zeolite is at least 15 wt.-%, preferably from 15 to 35 wt.-%, most preferred from 20 to 25 wt.-%. The amount of calcium carbonate ranges from 5 to 20 wt.-%, preferably from 10 to 15 wt.-%. All amounts are with respect to the total composite cement weight and of course the amounts of all components in each individual mixture add up to 100 wt.-%, i.e., when only cement, zeolite and calcium carbonate are contained their amounts add up to 100 wt.-%. In case further components are present, see below, the sum of their amounts is less the 100 wt.-%. It is noted that the stated amounts refer to the materials added whereas the weight ratio zeolite phases to calcium carbonate relates to the actual zeolite phases and CaCO₃ present in the composite cement. With other words, CaCO₃ as well as other non-zeolite phase components present in the zeolite decrease the weight ratio zeolite phases to calcium carbonate. The same applies to calcium carbonates containing other components than CaCO₃.

Further optional components of the composite cement according to the invention are other SCM selected from calcined clay, hyaloclastite, and mixtures thereof. If used they are typically contained in the amounts allowed by the applicable standard, e.g., EN 197-1 or EN 197-5. The composite cement according to the invention could also comprise very minor amounts of fly ash or ground granulated blast furnace slag, i.e. not more than 1 wt.-%. Preferably, no other SCM apart from zeolite and calcium carbonate is contained.

The composite cement can comprise additives such as but not limited to pigments, polymers, fibers, reinforcing elements, self-healing agents etc. and mixtures of two or more thereof. All these can be added in the amounts known per se.

The composite cement can also comprise admixtures, although admixtures are usually added to the building material made with the cement, e.g., to a concrete, mortar, or construction chemical composition. The mode of addition also depends on whether an admixture is a dry substance or provided as a solution or suspension. A solution or suspension in water is mostly added to the building material and not to the cement.

Admixtures are used to optimize the properties like setting time, hardening time, spread, viscosity and homogeneity as well as to impart desired properties to the final concrete part like strength, flexural modulus, freeze-thaw-resistance and many more. These admixtures are known per se and are used in their usual amounts, wherein the amount is adapted to a specific binder and special needs in the known manner.

For use, the composite cement is made into a hydraulically hardening building material, e.g., into mortar or concrete, by mixing with water (or another liquid). Typically, a water/cement weight ratio (w/c) from 1 to 0.1, preferably from 0.75 to 0.15, and most preferred from 0.65 to 0.35 is used. The zeolite and one or more optional additional SCMs as well as the calcium carbonate are included into the amount of cement for calculating the w/c.

The building material, e.g., mortar or concrete, usually also contains aggregates. Aggregate can be any aggregate known as such. Normally sand and/or gravel of selected particle sizes is/are used. In some cases, lightweight aggregate is used, typically as part of the aggregate but also as sole aggregate.

The invention will be illustrated further with reference to the examples that follow, without restricting the scope to the specific embodiments described. The invention includes all combinations of described and especially of preferred features that do not exclude each other. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

### Examples

The following materials were used:
- a first cement "Cem 1" being a CEM I 42.5R
- a second cement "Cem 2" comprising 95.52% ground clinker ("Cli") and 4.48% ground gypsum ("Gyp")
- a first ground limestone "LL1" comprising 96.1 wt.-% CaCO₃ in the form of calcite
- a second ground limestone "LL2" comprising 82.3 wt.-% CaCO₃ in the form of calcite
- four different ground zeolites "Z1", "Z2", "Z3", and "Z4".

The chemical composition of the materials including their loss on ignition at 950 °C or at 1050 °C is presented in table 1, their fineness in table 2, and the mineralogical composition of the zeolites in table 3.

**Table 1: Chemical composition of the materials in wt.-%**

| | Cem 1 | Cli | Gyp | LL1 | LL2 | Z1 | Z2 | Z3 | Z4 |
|---|---|---|---|---|---|---|---|---|---|
| LOI 950 °C | 1.94 | 0.75 | - | - | - | - | - | - | - |
| LOI 1050 °C | - | - | 15.0 | 42.9 | 37.5 | 6.15 | 12.61 | 12 | 14.8 |
| SiO₂ | 19.6 | 20.9 | 0.84 | 1.04 | 11.7 | 71.4 | 64.9 | 66.6 | 46.8 |
| Al₂O3 | 5.46 | 5.18 | 0.18 | 0.21 | 2.25 | 12.2 | 11 | 12.4 | 13.6 |
| TiO₂ | 0.23 | 0.28 | 0.01 | 0.01 | 0.09 | 0.15 | 0.12 | 0.16 | 0.57 |
| MnO | 0.07 | 0.07 | 0 | 0.06 | 0.04 | 0.04 | 0.06 | 0 | 0.12 |
| Fe₂O₃ | 3.16 | 3.79 | 0.06 | 0.16 | 0.78 | 1.27 | 0.76 | 1.55 | 5.27 |
| CaO | 61 | 65.9 | 35.1 | 54.5 | 45.8 | 1.52 | 5.06 | 3.46 | 10.5 |
| MgO | 2.43 | 1.09 | 0.55 | 0.91 | 0.55 | 0.42 | 0.3 | 0.98 | 3 |
| K₂O | 1.74 | 0.82 | 0.07 | 0.05 | 0.61 | 3.49 | 4.29 | 1.13 | 1.54 |
| Na₂O | 0.08 | 0.26 | 0 | 0.01 | 0.18 | 2.31 | 1.46 | 1.16 | 3.57 |
| SO₃ | 3.3 | 0.4 | 47.2 | 0.02 | 0.05 | 0 | 0 | 0.1 | 0.04 |
| P₂O₅ | 0.1 | 0.09 | 0 | 0.01 | 0.05 | 0.04 | 0.01 | 0.06 | 0.11 |
| Total | 99.1 | 99.7 | 99.2 | 100.1 | 99.7 | 99.1 | 100.7 | 99.8 | 100.1 |

**Table 2: Fineness of the materials**

| | Cem 1 | Cli | Gyp | LL1 | LL2 | Z1 | Z2 | Z3 | Z4 |
|---|---|---|---|---|---|---|---|---|---|
| Blaine [cm²/g] | 4900 | 4270 | 5490 | 3430 | 5900 | 12720 | 14550 | n.m. | 5840 |
| D₅₀ [µm] | 10.1 | 8.8 | 13.8 | 13.0 | 17.5 | 14.1 | 14.1 | 14.1 | 27.2 |
| D₉₀ [µm] | 39.3 | 40.4 | 71.5 | 143.8 | 104 | 49.2 | 47.7 | 54.5 | 103 |
| BET [m²/g] | 2.0 | 1.12 | 3.34 | 1.10 | 9.46 | 25.4 | 36.5 | 29.1 | 18.1 |

| | | | | | | | | | |
|---|---|---|---|---|---|---|---|---|---|
| n.m.: not measurable | | | | | | | | | |

**Table 3: Minerology of the zeolites in wt.-%**

| | Z1 | | Z2 | | Z3 | | Z4 | |
|---|---|---|---|---|---|---|---|---|
| Quartz | 6.8 | | 0.2 | | 8.9 | | 1.1 | |
| Cristobalite | 9.8 | | - | | - | | - | |
| Opal | - | | 10.5 | | - | | - | |
| Calcite | - | | 6.4 | | - | | 14.6 | |
| Zeolites (Heulandite, Analcime, Clinoptilolite) | 33.5 | | 65.4 | | 71.1 | | 49.5 | |
| Anorthite | - | | - | | 2.2 | | - | |
| Labradorite | - | | - | | 4.3 | | - | |
| Andesine | - | | - | | 8.6 | | 7.8 | |
| Albite | 10.5 | | - | | - | | - | |
| Sanidine Na | 10.6 | | - | | - | | - | |
| Orthoclase | 3.1 | | 4.6 | | - | | 8.3 | |
| Microcline max | 5.6 | | 3.0 | | - | | - | |
| Augite | 3.9 | | - | | - | | - | |
| Muscovite -2M1 | - | | 3.8 | | - | | 6.8 | |
| Biotite | 0.8 | | - | | - | | - | |
| Montmorillonite | - | | - | | - | | 0.9 | |
| Vermiculite | - | | - | | 0.7 | | 2.8 | |
| Sepiolite | - | | 0.2 | | 0.17 | | 0.6 | |
| Meionite | - | | - | | 2.7 | | - | |
| Amorphous content | 15.4 | | 5.9 | | - | | 6.6 | |
| Actinolite | - | | - | | - | | 0.3 | |
| Dolomite | - | | - | | 1.00 | | - | |
| Goethite | - | | - | | - | | 0.8 | |
| Total | 100 | | 100 | | 100 | | 100 | |

### Example 1

Three composite cements were made, a first comparison cement from 100 wt.-% Cem 1, a second comparison cement from 75 wt.-% Cem 1 and 25 wt.-% Z1, and a composite cement according to the invention from 75 wt.-% Cem 1, 20 wt.-% Z1, and 5 wt.-% LL1. Based on the content of 33.5 wt.-% zeolite minerals in Z1 the weight ratio zeolite/limestone was 1.3 in the composite cement according to the invention. Water demand was determined according to DIN EN 196-3:2017 and consistency as mortar spread according to DIN EN 413-2. The recovery of both was calculated as described before. Table 4a and 4b list the results.

**Table 4a: Water demand**

| Cem 1 | 25Z1 | 20Z1 + 5LL1 | Water demand recovery |
|---|---|---|---|
| 31.5% | 37.5 % | 34.5 % | 50% |

**Table 4b: Mortar spread [mm]**

| Time (Min) | Cem 1 | 25Z1 | 20Z1 + 5LL1 | Mortar spread recovery |
|---|---|---|---|---|
| 0 | 172 | 112 | 131 | 31.7 % |
| 15 | 170 | 108 | 128 | 32.3 % |
| 30 | 164 | n.m. | 127 | |
| 60 | 162 | n.m. | 119 | |

| | | | | |
|---|---|---|---|---|
| n.m.: not measurable | | | | |

The compressive strength development was measured in micro mortars. For the micro mortar tests, cubes of 2 cm x 2 cm x 2 cm were prepared, using a cement to sand weight ratio of 2:3. The sand used had a D₁₀, D₅₀ and D₉₀ of 0.128, 0.215 and 0.355 mm, respectively. A water to cement weight ratio of 0.50 was applied. The mortar cubes were cured for 24 hours in the steel form at 20 °C and > 95 % RH. The cubes were stored under water after demoulding till the date of testing. The loading speed of the press for the compressive strength measurement was 0.4 kN/s and 6 cubes were tested per sample age. The results of the strength measurement and the standard deviation from the average compressive strength of the 6 tested cubes are shown in table 5.

**Table 5: Compressive strength [MPa]**

| Day(s) | Cem 1 | 25Z1 | 20Z1 + 5LL1 |
|---|---|---|---|
| 1 | 25.6 ± 0.7 | 19.5 ± 0.3 | 18.1 ± 0.5 |
| 2 | 34.6 ± 0.6 | 26.6 ± 0.9 | 27.2 ± 0.9 |
| 7 | 41.8 ± 2.0 | 36.8 ± 1.1 | 37.6 ± 1.4 |
| 28 | 52.3 ± 3.3 | 48.4 ± 1.0 | 51.4 ± 2.6 |

The results indicate that substituting Z1 with 5 % LL1 could alleviate the significantly increased water demand of 25Z1 cement. As a result, there was a significant recovery in the loss of mortar spread. Furthermore, there is no loss in compressive strength for the 20Z1+5LL1 cement mortar after 2 days of curing, when compared to the 25Z1 cement mortar. After a curing period of 28 days, the compressive strength of the 20Z1+5LL1 cement mortar was nearly equivalent to that of the reference Cem 1 cement mortar.

### Example 2

Three composite cements were made, a first comparison cement from 100 wt.-% Cem 1, a second comparison cement from 75 wt.-% Cem 1 and 25 wt.-% Z2, and a composite cement according to the invention from 75 wt.-% Cem 1, 20 wt.-% Z2, and 5 wt.-% LL1. Based on the content of 65.4 wt.-% zeolite minerals in Z2 and taking into account the 6.40 wt.-% CaCO₃ in it and the content of 96.1 wt.-% CaCO₃ in LL1 the weight ratio zeolite/calcium carbonate was 2.1 in the composite cement according to the invention. Water demand was determined according to DIN EN 196-3:2017 and consistency as mortar spread according to DIN EN 413-2. Table 6a and 6b list the results.

**Table 6a: Water demand**

| Cem 1 | 25Z2 | 20Z2 + 5LL1 | Water demand recovery |
|---|---|---|---|
| 31.5 % | 38.0 % | 36.0 % | 30.8 % |

**Table 6b: Mortar spread [mm]**

| Time (Min) | Cem 1 | 25Z2 | 20Z2 + 5LL1 | Mortar spread recovery |
|---|---|---|---|---|
| 0 | 172 | 138 | 159 | 61.8 % |
| 15 | 170 | 134 | 152 | 50.0 % |
| 30 | 164 | 129 | 146 | 48.6 % |
| 60 | 162 | n.m. | 138 | |
| 90 | 154 | n.m. | 136 | |

| | | | | |
|---|---|---|---|---|
| n.m.: not measurable | | | | |

The compressive strength was measured for all composite cements with micro mortar tests as described in example 1. The results of the compressive strength measurement and the standard deviation are shown in table 7.

**Table 7: Compressive strength [MPa]**

| Day(s) | Cem 1 | 25Z2 | 20Z2 + 5LL1 |
|---|---|---|---|
| 1 | 25.6 ± 0.7 | 17.8 ± 0.4 | 17.9 ± 0.6 |
| 2 | 34.6 ± 0.6 | 27.6 ± 0.7 | 28.1 ± 0.6 |
| 7 | 41.8 ± 2.0 | 47.2 ± 1.2 | 45.6 ± 1.3 |
| 28 | 52.3 ± 3.3 | 69.8 ± 2.1 | 67.4 ± 1.8 |

In contrast to Z1, Z2 contained twice as much zeolite minerals, with an additional 32 wt.-% of heulandite present in addition to 33.3 wt.-% of clinoptilolite. Additionally, Z2 contained 6.4 wt.-% of CaCO₅, but still resulting in a higher effective zeolite/calcium carbonate weight ratio of 2.1 in the 20Z2 + 5LL1 cement when compared to the 20Z1 + 5LL1 cement, which had an effective zeolite/calcium carbonate weight ratio of 1.4. Due to the high zeolite content, the potential for water demand reduction through the addition of calcium carbonate was limited. However, the presence of calcium carbonate in the starting material already led to a significant improvement in mortar spread for the 25Z2 cement when compared to the 25Z1 cement. Further improvements were observed when increasing the amount of LL1 used in 20Z2 + 5LL1 cement. More important, after 7 days of curing both the 25Z2 and 20Z2 + 5LL1 cement mortars exhibited higher compressive strength than the reference Cem 1, suggesting the potential for further improvements by adding more LL1 to increase the workability and reduce the water demand.

### Example 3

Four composite cements were made, a first comparison cement from 100 wt.-% Cem 1, a second comparison cement from 75 wt.-% Cem 1 and 25 wt.-% Z3, and two composite cements according to the invention, one from 75 wt.-% Cem 1, 20 wt.-% Z3, and 5 wt.-% LL1 and the second from 75 wt.-% Cem 1, 15 wt.-% Z3, and 10 wt.-% LL1. Based on the content of 71.1 wt.-% zeolite minerals in Z3 and the content of 96.1% CaCO₃ in LL1 the weight ratio zeolite/calcium carbonate was 3.0 in the first composite cement according to the invention and 1.1 in the second. Water demand was determined according to DIN EN 196-3:2017 and consistency as mortar spread according to DIN EN 413-2. Table 8a and 8b list the results.

**Table 8a: Water demand**

| Cem 1 | 25Z3 | 20Z3 + 5LL1 | Water demand recovery | 15Z3 + 10LL1 | Water demand recovery |
|---|---|---|---|---|---|
| 31.5 % | 37.0 % | 36.5 % | 9.1 % | 32.0% | 90.9 % |

**Table 8b: Mortar spread [mm]**

| Time (Min) | Cem 1 | 25Z3 | 20Z3 + 5LL1 | Mortar spread recovery | 15Z3 + 10LL1 | Mortar spread recovery |
|---|---|---|---|---|---|---|
| 0 | 172 | 120 | 130 | 19.2 % | 150 | 57.7 % |
| 15 | 170 | 118 | 126 | 15.4 % | 151 | 63.5 % |
| 30 | 164 | n.m. | 120 | | 145 | |
| 60 | 162 | n.m. | n.m. | | 130 | |

| | | | | | | |
|---|---|---|---|---|---|---|
| n.m.: not measurable | | | | | | |

The compressive strength was measured for all composite cements with micro mortar tests as described in example 1. The results of the strength measurement and the standard deviation are shown in table 9.

**Table 9: Compressive strength [MPa]**

| Day(s) | Cem 1 | 25Z3 | 20Z3 + 5LL1 | 15Z3 + 10LL1 |
|---|---|---|---|---|
| 1 | 25.6 ± 0.7 | 14.5 ± 0.3 | 14.5 ± 0.6 | 9.5 ± 0.3 |
| 2 | 34.6 ± 0.6 | 25.9 ± 1.0 | 25.3 ± 0.9 | 20.3 ± 0.3 |
| 7 | 41.8 ± 2.0 | 43.7 ± 1.8 | 50.0 ± 0.9 | 42.7 ± 0.8 |
| 28 | 52.3 ± 3.3 | 71.8 ± 3.6 | 74.4 ± 1.3 | 66.6 ± 1.1 |

Z3 contained a high content of zeolite phases, namely of 31.5 wt.-% heulandite and 39.6 wt.-% clinoptilolite. The total content of zeolite minerals was 6 % higher than that of Z2, and without a presence of limestone in Z3. When 5 wt.-% of LL1 was added, an effective zeolite/calcium carbonate ratio of 3.0 resulted in the 20Z3 + 5LL1 cement, higher than in the 20Z2 + 5LL1 cement. Consequently, there was only a minor reduction in water demand and limited improvement in measurable mortar spread up to 30 minutes. However, the compressive strength of 20Z3 + 5LL1 cement was far higher than that of the reference Cem 1 already after 7 days of curing, suggesting a huge potential for further addition of LL1 to improve the mortar spread without sacrificing the compressive strength compared to the reference Cem 1. With an addition of 10 wt.-% LL1 in 15Z3+10LL1 the ratio zeolite/calcium carbonate decreased to 1.1 and the water demand and mortar spread improved tremendously. Nonetheless, strength at 28 days was still superior to the cement without SCM addition. Based on these findings, using Z3 even higher clinker replacement levels are possible. A test with 30 wt.-% SCM comprising 20 wt.-% Z3 and 10 wt.-% LL1, i.e., a ratio zeolite/calcium carbonate of 1.5, resulted in a composite cement with a water demand of 33.8 %, a mortar spread directly after mixing of 142 mm and after 60 minutes of 122 mm. After 1 day the measured strength was 8.2 MPa, after 2 days 17.3 MPa, after 7 days 42.1 MPa, and after 28 days 61.7 MPa. Thus, it is expected that also 40 wt.-% SCM, maybe more, can be used.

### Example 4

Five composite cements were made, a first comparison cement from 100 wt.-% Cem 2, a second comparison cement from 70 wt.-% Cem 2 and 30 wt.-% LL2, a third comparison cement from 70 wt.-% Cem 2 and 30 wt.-% Z4, a first composite cement according to the invention from 70 wt.-% Cem 2, 21 wt.-% Z4, and 9 wt.-% LL2, and a second composite cement according to the invention from 70 wt.-% Cem 2, 15 wt.-% Z4, and 15 wt.-% LL2. Based on the content of 49.5 wt.-% zeolite minerals in Z4 and taking into account its content of 14.6 wt.-% calcium carbonate and the content of 82.3 wt.-% CaCO₃ content in LL2 the weight ratio zeolite/calcium carbonate was 1.0 in the first composite cement according to the invention and 0.6 in the second composite cement according to the invention. Water demand was determined according to DIN EN 196-3:2017 and consistency as mortar spread according to DIN EN 413-2. Table 10a and 10b list the results.

**Table 10a: Water demand**

| Cem 2 | 30LL2 | 30Z4 | 21Z4 + 9LL2 | Water demand recovery | 15Z4 + 15LL2 | Water demand recovery |
|---|---|---|---|---|---|---|
| 26.0 % | 27.5 % | 31.0 % | 30.0 % | 20.0 % | 29.0 % | 40.0 % |

**Table 10b: Mortar spread [mm]**

| Time (Min) | Cem 2 | 30LL2 | 30Z4 | 21Z4 + 9LL2 | Mortar spread recovery | 15Z4 + 15LL2 | Mortar spread recovery |
|---|---|---|---|---|---|---|---|
| 0 | 206 | 166 | 144 | 150 | 9.7 % | 162 | 29.0 % |
| 30 | 187 | 151 | 128 | 134 | 10.2 % | 146 | 30.5 % |
| 60 | 185 | 145 | 121 | 127 | 9.4 % | 140 | 29.7 % |

The compressive strength was measured for all composite cements with micro mortar tests as described in example 1. The results of the compressive strength measurement and standard deviation are shown in table 11.

**Table 11: Compressive strength [MPa]**

| Day(s) | Cem 2 | 30LL2 | 30Z4 | 21Z4 + 9LL2 | 15Z4 + 15LL2 |
|---|---|---|---|---|---|
| 1 | 12.2 ± 0.4 | 10.9 ± 0.3 | 10.5 ± 0.2 | 10.5 ± 0.3 | 10.2 ± 0.2 |
| 2 | 24.2 ± 1.3 | 19.8 ± 0.5 | 19.0 ± 0.6 | 20.7 ± 0.6 | 19.2 ± 0.5 |
| 7 | 48.2 ± 0.9 | 33.8 ± 1.0 | 36.9 ± 1.3 | 37.9 ± 0.8 | 36.7 ± 0.7 |
| 28 | 59.9 ± 1.7 | 40.8 ± 0.8 | 55.0 ± 1.7 | 53.4 ± 0.4 | 50.7 ± 1.1 |
| 90 | 64.9 ± 2.7 | 45.2 ± 2.1 | 61.9 ± 1.8 | 63.2 ± 1.0 | 58.4 ± 1.4 |

Z4 contained 49.5 wt.-% zeolite phases, consisting of three different minerals: 12 wt.-% heulandite, 19.4 wt.-% analcime, and 18.1 wt.-% clinoptilolite. Additionally, it contained about 11 wt.-% clay minerals which are also water absorptive. Example 4 focussed on replacing 30 wt.-% of the reference Cem 2 with supplementary cementitious materials, i.e. 30 wt.-% of LL2 or Z4 or their mixture. Two Z4/LL2 mixtures, 70/30 and 50/50, were selected to study the impact of limestone content. With the calcium carbonate present in the zeolite and taking into account the 82.3 wt.-% CaCO₃ in LL2, the resulting cements 21Z4 + 9LL2 and 15Z4 + 15LL2 had a zeolite/calcium carbonate ratio of 1.0 and 0.5, respectively. These ratios were much lower compared to the previous examples. The results show that the water demand was gradually reduced by increasing the amount of LL2, while the mortar spread was gradually increased. The cement had good mortar spread even for 30Z4 compared to the 25Z1, 25Z2, and 25Z3 cements due to the presence of a high content (14.6 wt.-%) of CaCO₃ in Z4. However, due to the high content of CaCO₃ in the resulting cements (21Z4 + 9LL2 and 15Z4 + 15LL2), their 28-day compressive strength was lower than that of reference Cem 2. Nevertheless, recovery was observed after 90 days of curing, where the 21Z4 + 9LL2 cement showed comparable strength to the reference Cem 2.

## Claims

1. Composite cement comprising a hydraulic cement, a calcium carbonate and at least 15 wt.-% zeolite with respect to the total composite cement weight, wherein the weight ratio of zeolite phases to total calcium carbonate in the composite cement ranges from 0.5 to 4.0 and neither slag nor fly ash is contained in an amount of > 1 wt.-%.

2. Composite cement according to claim 1, wherein the hydraulic cement is Portland cement, Portland cement based cement,calcium aluminate cement, calcium sulfoaluminate cement, or a belite binder.

3. Composite cement according to claim 1 or 2, wherein the calcium carbonate is limestone, dolomite, carbonated recycled cement paste, precipitated calcium carbonate or a mixture of two or more or all of them, preferably limestone.

4. Composite cement according to any one of claims 1 to 3, wherein the zeolite comprises at least 30 wt.-%, preferably at least 40 wt.-%, most preferred at least 50 wt.-% zeolite phases.

5. Composite cement according to any one of claims 1 to 4, wherein the zeolite phases are clinoptilolite, heulandite, mordenite, chabazite, natrolite, phillipsite, analcime, stilbite or mixtures of two or more thereof, preferably clinoptilolite or heulandite or mixtures of them.

6. Composite cement according to any one of claims 1 to 5, wherein the zeolite is a natural zeolite obtained from a quarry or reclaimed from landfilling of zeolites that were found unsuitable or were quarry overburden at the time of their mining.

7. Composite cement according to any one of claims 1 to 6, wherein the weight ratio of zeolite phases to calcium carbonate ranges from > 0.5 to 4.0, preferably from > 0.9 to 2.0, in the composite cement.

8. Composite cement according to any one of claims 1 to 7, wherein the composite cement comprises from 50 wt.% to 80 wt.-%, preferably from 60 wt.% to 75 wt.-%, most preferred from 65 wt.% to 70 wt.-%, hydraulic cement, from 15 to 35 wt.-%, preferably from 20 to 25 wt.-% zeolite, and from 5 to 20 wt.-%, preferably from 10 to 15 wt.-%, calcium carbonate.

9. Composite cement according to any one of claims 1 to 8, wherein additives, preferably one or more of pigments, polymers, fibers, reinforcing elements, self-healing agents, are contained.

10. Composite cement according to any one of claims 1 to 9, wherein admixtures are contained, preferably one or more of admixtures that optimize the properties of a hydraulically hardening building material made from the composite cement and/or impart desired properties to a building structure resulting from hardening of the hydraulically hardening building material.

11. Composite cement according to claim 10, wherein the one or more admixture optimizes the setting time, hardening time, spread, viscosity and/or homogeneity of the hydraulically hardening building material, and/or the one or more admixture imparts a desired strength, flexural modulus, and/or freeze-thaw-resistance to the building structure.

12. Composite cement according to any one of claims 1 to 11, wherein a hydraulically hardening building material made from the composite cement shows a water demand recovery from 9 to 90 %, preferably > 30 %, most preferred > 40 %, and/or a mortar spread recovery from 9 to 65 %, preferably > 30 %, most preferred > 40 %.

13. Composite cement according to any one of claims 1 to 12, wherein a compressive strength of a hardened hydraulically hardening building material made from the composite cement measured according to EN 197-1 after 2 days is ≥ 10.0 MPa, or ≥ 20.0 MPa, or ≥ 30.0 MPa, and/or after 28 days is ≥ 32.5 MPa, or ≥ 42.5 MPa, or ≥ 52.5 MPa.
